# EUROPÄISCHE PATENTSCHRIFT

(11) **EP 1 768 760 B1**
(45) Veröffentlichungstag und Bekanntmachung des Hinweises auf die Patenterteilung: **02.01.2008**
(21) Anmeldenummer: 06763994.8
(22) Anmeldetag: 30.06.2006
(51) Int. Cl.: B01D 3/34, B01D 53/14

(54) **VERFAHREN ZUR ABTRENNUNG VON MALEINSÄUREANHYDRID AUS MALEINSÄUREANHYDRIDHALTIGEN GEMISCHEN DURCH STRIPPUNG**
METHOD FOR SEPARATING MALEIC ANHYDRIDE FROM MIXTURES CONTAINING THE SAME BY MEANS OF STRIPPING
PROCEDE POUR SEPARER PAR STRIPAGE DE L'ANHYDRIDE D'ACIDE MALEIQUE DE MELANGES EN CONTENANT

(30) Priorität: 05.07.2005 DE 102005031314
(43) Veröffentlichungstag der Anmeldung: 04.04.2007
(73) Patentinhaber: BASF AKTIENGESELLSCHAFT, 67056 Ludwigshafen (DE)
(72) Erfinder: WINDECKER, Gunther, 67067 Ludwigshafen (DE); WECK, Alexander, 67251 Freinsheim (DE); STEINIGER, Michael, 67435 Neustadt (DE); BREDEHÖFT, Jan Peter, 67454 Hassloch (DE); BENDER, Bianca, 67551 Worms (DE); KNAPPIK, Peter, 67227 Frankenthal (DE); VANDEN HAUTTE, Dany, B-7320 Bernissart (BE); PIERRE, Bernard, 1435 Mont-Saint-Guibert (BE); HAFFNER, Beatrix, 67071 Ludwigshafen (DE)
(86) Internationale Anmeldenummer: PCT/EP2006/063744
(87) Internationale Veröffentlichungsnummer: WO 2007/003600

(56) Entgegenhaltungen:
- EP-B- 1 056 708
- WO-A-97/43234
- US-A- 5 120 330

## Beschreibung

Die Erfindung betrifft ein Verfahren zur Abtrennung von Maleinsäureanhydrid aus einem maleinsäureanhydridhaltigen Gasstrom, ein Verfahren zur Herstellung von Maleinsäureestern sowie ein Verfahren zur Herstellung von Hydrierungsprodukten von Maieinsäurederivaten, welche die Abtrennung von Maleinsäureanhydrid aus einem maleinsäureanhydridhaltigen Gasstrom umfassen.

Maleinsäureanhydrid wird großtechnisch durch katalytische Luftoxidation von Kohlenwasserstoffen, wie Benzol, Butenen oder Butan hergestellt. Das dabei erhaltene gasförmige Reaktionsgemisch enthält neben Maleinsäureanhydrid vor allem Wasser, Kohlenmonoxid und Kohlendioxid.

Das aus den Reaktorabgasen der Kohlenwasserstoff-Oxidation erhältliche Maleinsäureanhydrid, bzw. die aus Maleinsäureanhydrid durch Umsetzung mit Alkoholen erhaltenen Maleinsäurederivate, wie Maleinsäureester, werden häufig einer nachfolgenden Hydrierung zu Butandiol, Tetrahydrofuran oder γ-Butyrolacton unterworfen. In WO 97/43234 ist ein Verfahren zur Herstellung von γ-Butyrolacton, Butan-1,4-diol und Tetrahydrofuran beschrieben, bei dem Maleinsäureanhydrid aus den maleinsäureanhydridhaltigen Reaktorabgasen der Kohlenwasserstofif-Oxidation mit einem hochsiedenden inerten organischen Lösungsmittel als Absorptionsmittel ausgewaschen und Maleinsäureanhydrid aus dem erhaltenen Absorptionsaustrag durch Strippung mit einem Wasserstoffgasstrom abgetrennt wird. Das herausgestrippte Maleinsäureanhydrid gelangt nachfolgend in eine Gasphasenhydrierung zur Herstellung von Butandiol, Tetrahydrofuran und γ-Butyrolacton. Nachteilig an diesem Verfahren ist die vermehrte Bildung von freier Maleinsäure bzw. Fumarsäure im Absorptionsmittelkreislauf. Um einen hohen Wirkungsgrad beim Auswaschen des Maleinsäureanhydrids mit dem Absorptionsmittel zu erreichen, ist es erforderlich das Absorptionsmittel möglichst kühl zu verwenden. Durch die geringere Temperatur sinkt jedoch auch die Löslichkeit von schwersiedenden unerwünschten Nebenprodukten, die während des Prozesses entstehen können, und es kommt zu Ablagerungen. So wird in Gegenwart selbst kleiner Mengen Wasser, wie sie in den Reaktorabgasen der Kohlenwasserstoff-Oxidation häufig enthalten sind und auch von dem Absorptionsmittel mit ausgewaschen werden, aus Maleinsäureanhydrid die freie Maleinsäure als Nebenprodukt gebildet, die korrosiv ist. Die freie Maleinsäure neigt insbesondere bei hohen Temperaturen und langen Verweilzeiten zur Isomerisierung in die nur sehr schlecht lösliche Fumarsäure, was durch Ablagerungen insbesondere in Anlagenteilen wie Wärmetauschern und Kolonnen, Abstellungen der gesamten Anlage zu Reinigungszwecken erforderlich macht.

Aufgabe der Erfindung ist es, ein für die Herstellung von Maleinsäurederivaten bzw. von deren Hydrierungsprodukten geeignetes Verfahren zur Abtrennung von Maleinsäureanhydrid aus den maleinsäureanhydridhaltigen Reaktorabgasen der Kohlenwasserstoff-Oxidation bereitzustellen, welches die vorstehend genannten Nachteile deutlich verringert.

Die Erfindung geht aus von einem Verfahren zur Abtrennung von Maleinsäureanhydrid aus einem maleinsäureanhydridhaltigen Gasstrom, bei dem der maleinsäureanhydridhaltige Gasstrom mit einer flüssigen Absorbensphase, enthaltend mindestens ein hochsiedendes inertes Absorptionsmittel für Maleinsäureanhydrid, in Berührung gebracht wird, und aus der erhaltenen flüssigen Absorbatphase Maleinsäureanhydrid durch Strippen mit wasserstoffhaltigem Gas in einer weiteren Kolonne abgetrennt wird. Das erfindungsgemäße Verfahren ist dadurch gekennzeichnet, dass das Strippungsmittel an zwei Stellen der Kolonne, die mindestens eine theoretische Trennstufe auseinanderliegen, eingespeist wird.

Eine Definition für eine theoretische Trennstufe kann beispielsweise E.-U. Schlünder, F.Thumer, Destillation, Absorption, Extraktion, Thieme Verlag 1986, Seite 66 und Seiten 131-132 entnommen werden.

Unter Absorbensphase wird die flüssige Mischung aus Absorptionsmitteln verstanden. Die Absorbatphase ist die mit dem Absorptiv, hier Maleinsäureanhydrid bzw. dessen Umsetzungsprodukte, beladene Absorbensphase.

Die flüssige Absorbens- bzw. Absorbatphase enthält mindestens ein hochsiedendes inertes Absorptionsmittel für Maleinsäureanhydrid. Das inerte hochsiedende Absorptionsmittel weist im allgemeinen einen Siedepunkt auf, der um mindestens 30°C, bevorzugt um mindestens 50°C, besonders bevorzugt um mindestens 70°C höher liegt als der Siedepunkt von Maleinsäureanhydrid. Geeignete Absorptionsmittel sind beispielsweise in WO 97/43234 beschrieben. Beispiele sind hochsiedende Ester der Phthalsäure, Terephthalsäure oder Maleinsäure, wie Dimethyl-, Diethyl- oder Dibutylphthalate, Dimethylterephthalat oder Dibutylmaleat, aromatische Kohlenwasserstoffe, wie Dibenzylbenzol, Ester von cycloaliphatischen Säuren wie Dibutylhexahydrophthalat, ferner Polymethylbenzophenone, Ethylenglycolether und Polysiloxanether. Bevorzugte Absorptionsmittel sind Ester von aromatischen bzw. cycloaliphatischen Dicarbonsäuren, besonders bevorzugt sind Ester der Phthalsäure bzw. Terephthalsäure. Das hochsiedende Absorptionsmittel liegt in der Absorbatphase im allgemeinen im Überschuß vor. Das Gewichtsverhältnis Absorptionsmittel zu Maleinsäureanhydrid beträgt im allgemeinen von 1 : 1 bis 100 : 1, bevorzugt von 2 : 1 bis 100 : 1 , besonders bevorzugt von 4 : 1 bis 100 : 1.

Die Abtrennung von Maleinsäureanhydrid aus der Absorbatphase erfolgt durch Strippung mit einem wasserstoffhaltigen Gas als Strippungsmittel. Unter Strippung wird die Abtrennung des in der Absorbatphase vorliegenden Absorptivs mit Hilfe eines Desorptionshilfsmittels (Strippungsmittel) verstanden, wobei sich das Absorptiv in dem Strippungsmittel anreichert. Die Absorbatphase wird an dem Absorptiv entsprechend abgereichert und wird dabei regeneriert. Als wasserstoffhaltiges Gas sind Wasserstoff und Gemische von Wasserstoff mit unter den Reaktionsbedingungen inerten Gasen, wie beispielsweise Stickstoff, oder weiteren Komponenten die während der nachfolgenden Hydrierung entstehen können geeignet. Bevorzugt wird das zuletzt erwähnte Wasserstoffgemisch eingesetzt.

Das Molverhältnis Wasserstoff zu Maleinsäureanhydrid beträgt im allgemeinen von 1 : 1 bis 500 : 1, bevorzugt von 5 : 1 bis 400 : 1 , besonders bevorzugt von 10 : 1 bis 400 : 1.

Die Gesamtwasserstoffmenge in Normkubikmeter (Nm³) verteilt sich auf die obere bzw. untere Zugabestelle im Verhältnis 1:1 bis 1000:1, bevorzugt von 1:1 bis 100:1, besonders bevorzugt von 1:1 1 bis 30:1. Dabei kann es vorteilhaft sein für den größeren Teilstrom wasserstoffhaltiges Gas und für den kleineren Teilstrom Reinwasserstoff zu verwenden.

Die Strippung wird im allgemeinen im Gegenstromverfahren durchgeführt. Dabei läuft die mit Maleinsäureanhydrid beladene Absorbatphase dem gasförmigen Strippungsmittel entgegen, wobei ein intensiver Stoff- und Wärmeaustausch zwischen der absteigenden flüssigen Absorbatphase und der aufsteigenden Wasserstoffphase stattfindet. Die flüssige Absorbatphase wird sukzessive an Maleinsäureanhydrid abgereichert, die Wasserstoffphase entsprechend an Maleinsäureanhydrid bzw. deren Reaktionsprodukten angereichert. Vorzugsweise wird die Strippung im Gegenstromverfahren in einer Kolonne, beispielsweise einer Füllkörper-, Packungs-, oder Glockenbodenkolonne, durchgeführt. Vorzugsweise werden der als Strippungsmittel eingesetzte Wasserstoff an zwei Stellen im unteren bzw. mittleren Abschnitt der Kolonne und die mit Maleinsäureanhydrid beladene Absorbatphase im oberen Abschnitt der Kolonne in die Kolonne eingebracht. Am Sumpf der Kolonne wird die an Maleinsäureanhydrid abgereicherte Absorbatphase, am Kopf der Kolonne der als Strippungsmittel eingesetzte Wasserstoff zusammen mit den Maleinsäurederivaten erhaften.

Das Strippungsmittel wird erfindungsgemäß an mindestens zwei Zugabestellen, bevorzugt an zwei Stellen, in die Kolonne eingespeist. Als räumlich untere Zugabestelle wird dabei bevorzugt die Zugabe durch den Kolonnensumpf oder besonders bevorzugt das Zugeben in den Gasraum über den Kolonnensumpf gewählt. Bei der Zugabe durch den Kolonnensumpf kühlt der als Strippungsmittel verwendete Wasserstoff den Sumpf und vermindert auf diese Weise die Bildung schwersiedendender, das heißt höher als Maleinsäureanhydrid siedende, Nebenprodukte wie zum Beispiel Fumarsäure. Die zweite Zugabestelle des restlichen Strippungsmittels, dem bevorzugten Wasserstoffgemisch, wird mindestens eine theoretische Trennstufe höher in die Kolonne eingespeist. Das Strippungsmittel kann vor dem Eintritt in die Kolonne vorgewärmt. Der Teilstrom des Strippungsmittels an der räumlich unteren Zugabestelle wird bevorzugt eine niedrigere Temperatur als der Teilstrom des Strippungsmittels an der oberen Zugabestelle.
Hierbei beträgt die Temperatur des Strippungsmittels an der oberen Zugabestelle zwischen 100 und 250°C, bevorzugt zwischen 100°C und 230°C, besonders bevorzugt zwischen 130 und 230°C.
Die Temperatur des Strippungsmittels an der unteren Zugabestelle liegt zwischen im Allgemeinen 25°C und 250°C, bevorzugt zwischen 25°C und 230°C , besonders bevorzugt zwischen 25°C und 200°C.

Durch die erfindungsgemäße Zugabe der wasserstoffhaltigen Strippungsmittel an zwei Zugabestellen wird andererseits in den Gasraum über dem Sumpf oder durch den Sumpf nur ein Teil des insgesamt erforderlichen Strippungsmitttels eingespeist. Bei vorausgesetzt gleicher Strömungsgeschwindigkeit kann die Kolonne in diesem Bereich im Durchmesser kleiner ausgelegt werden, was einen erheblichen Kostenvorteil mit sich bringt. Zudem wird dadurch der Sumpfinhalt verringert und somit die Verweilzeit des Maleinsäuranhydrids bzw. der freien Maleinsäure im Sumpf verkürzt und so die Bildung von schwersiedenden Nebenprodukten wie Fumarsäure vermindert.

Überraschend wurde weiterhin gefunden, dass durch das erfindungsgemäße Verfahren leichtsiedende, das heißt niedriger als Maleinsäureanhydrid siedende, Nebenprodukte wie Methanol, Ethanol, Butanol und Tetrahydrofuran um einen Faktor 5-15 besser aus dem Absorptionsmittel abgereichert werden können als die den Wasserstoff-Strippungen mit nur einer Zugabestelle des Wasserstoffs oberhalb des Sumpfs. Das inerte Absorptionsmittel für Maleinsäureanhydrid kann daher, gegebenenfalls ohne weitere Aufreinigung, wesentlich öfter recycelt werden.

Unter Maleinsäurederivaten im Sinne der Erfindung werden Maleinsäureanhydrid, Maleinsäure, Maleinsäuremonoester, Maleinsäurediester, Fumarsäure, Fumarsäuremonoester und Fumarsäurediester, wobei den Estern aliphatische C₁ bis C₄-Alkohole zugrundeliegen, verstanden. Bevorzugt werden Ester und Diester des Methanols, Ethanols, n-Propanois, iso-Propanols, n-Butanols, iso-Butanols, sek.-Butanols, n-Pentanols und iso-Pentanols, besonders bevorzugt des Methanols, Ethanols und n-Butanols eingesetzt.

Das Arbeiten im Gegenstromverfahren entspricht einer bevorzugten Ausführungsform der Erfindung. In einer besonders bevorzugten Ausführungsform befinden sich zwischen der Zulaufstelle für die Absorbatphase und dem Kolonnenkopf weitere Trennstufen zur Zurückhaltung des hochsiedenden inerten Absorptionsmittels. lm Sumpf wird die abgereicherte Absorbatphase erhalten, die einer erneuten Absorption zugeführt werden kann. Ein hoher Abreicherungsgrad ist nicht erforderlich, aber wünschenswert. Er beträgt, bezogen auf den Maleinsäureanhydrid-Gehait des Kopfzulaufes, im allgemeinen 80 bis 100, bevorzugt 95 bis 100%.

Die Strippung wird im allgemeinen bei Temperaturen oberhalb 100°C im Sumpf durchgeführt. Vorzugsweise beträgt sie bei der Strippung 100 bis 250°C, besonders bevorzugt 130 bis 250°C. Der Druck beträgt bei der Strippung im allgemeinen zwischen 10 mbar und 100 bar, bevorzugt zwischen 100 mbar und 60 bar, besonders bevorzugt zwischen 300 mbar und 20 bar. Vorteilhaft an dem erfindungsgemäßen Verfahren ist der geringe Anteil an freier Malein- bzw. Fumarsäure im Kopfprodukt. Im allgemeinen ist der Anteil an freier Säure im Kopfprodukt, bezogen auf die Gesamtmenge der Maleinsäurederivate, abhängig von der vorhandenen Wassermenge.

Gegenstand der Erfindung ist weiterhin ein Verfahren zur Herstellung von Maleinsäureestern mit den Schritten:
a) Inberührungbringen eines Gasstrom aus maleinsäureanhydridhaltigen Reaktorabgasen aus der Maleinsäureanhydrid-Herstellung durch Kohlenwasserstoff-Oxidation mit einer flüssigen Absorbensphase, enthaltend mindestens ein inertes hochsiedendes Absorptionsmittel mit einem um mindestens 30°C höheren Siedepunkt als Maleinsäureanhydrid,
b) Abtrennen von Maleinsäureanhydrid aus der erhaltenen flüssigen Absorbatphase durch Strippung mit wasserstoffhaltigem Gas als Strippungsmittel,
c) Veresterung des abgetrennten Maleinsäureanhydrids mit einem aliphatischen C₁-bis C₅-Alkohol.

Als aliphatischer C₁- bis C₅-Alkohol werden zur Veresterung bevorzugt Methanol, Ethanol, n-Propanol, iso-Propanol, n-Butanol, iso-Butanol, sek.-Butanol, n-Pentanol und isoPentanol, besonders bevorzugt des Methanols, Ethanols und n-Butanols eingesetzt.

Das im Abtrennschritt b) erhaltene Gemisch bzw. das durch weitergehende Veresterung gemäß Schritt c) des vorstehend beschriebenen Verfahrens erhaltene Gemisch bzw. aus diesem Gemisch durch Destillation gewonnene Maleinsäurederivate können nachfolgend einer Hydrierung unterworfen werden. Je nach Reaktionsbedingungen werden bevorzugt 1 ,4-Butandiol, Tetrahydrofuran und/oder γ-Butyrolacton erhalten.

Die Veresterung von Maleinsäureanhydrid, Maleinsäure, Maleinsäuremonoester bzw. allgemein von Carbonsäuren ist in EP-A 0 255 399, EP-A 0 454 719, DE-A 5 543 673, DE-A 19 607 953 oder in "Organikum", VEB Deutscher Verlag der Wissenschaften, 15. Auflage, Berlin 1977, S. 498-502 beschrieben. Bevorzugt werden mit dem erfindungsgemäßen Verfahren die Maleinsäurediester hergestellt.

Gegenstand der vorliegenden Erfindung ist auch ein Verfahren zur Herstellung von mindestens einer Verbindung ausgewählt aus der Gruppe bestehend aus 1,4-Butandiol, γ-Butyrolacton und Tetrahydrofuran mit den Schritten:
a) Inberührungbringen eines Gasstroms aus maleinsäureanhydridhaltigen Reaktorabgasen aus der Maleinsäureanhydrid-Herstellung durch Kohlenwasserstoff-Oxidation mit einer flüssigen Absorbensphase, enthaltend mindestens ein inertes hochsiedendes Absorptionsmittel mit einem um mindestens 30°C höheren Siedepunkt als Maleinsäureanhydrid,
b) Abtrennen von Maleinsäureanhydrid durch Strippung mit wasserstoffhaltigem Gas als Strippungsmittel
c) gegebenenfalls Veresterung des abgetrennten Maleinsäureanhydrids mit einem aliphatischen C₁- bis C₅-Alkohol
d) gegebenenfalls Abtrennung des Alkohols von dem in Schritt c) erhaltenen Gemisch, enthaltend Maieinsäurederivate,
e) Hydrierung der erhaltenen Maleinsäurederivate.

Das im Abtrennschritt b) erhaltene Maleinsäureanhydrid kann direkt hydriert werden. Es ist jedoch auch möglich das im Abtrennschritt b) erhaltene Gemisch einer Veresterung mit dem Alkohol zu unterziehen, wobei die vorstehend genannten aliphatischen C₁- bis C₅-Alkohole als Veresterungsalkohole Verwendung finden und Methanol, Ethanol und n-Butanol bevorzugt verwendet werden.

Das im Abtrennschritt b) bzw. durch Veresterung gemäß Schritt c) erhaltene Gemisch kann direkt der Hydrierung unterworfen werden. Vorzugsweise wird vor der Hydrierung der Alkohol gemäß Schritt d) aus dem erhaltenen Gemisch abgetrennt.

Die Hydrierung der erhaltenen Maleinsäurederivate kann in flüssiger Phase oder in der Gasphase durchgeführt werden. Die Hydrierung kann mit homogen gelösten Katalysatoren, mit suspendierten Katalysatoren oder mit Festbettkatalysatoren durchgeführt werden. Im allgemeinen enthalten die eingesetzten Hydrierkatalysatoren eines oder mehrere der folgenden Elemente:

Kupfer, Palladium, Platin, Ruthenium, Rhenium, Kobalt, Mangan, Nickel, Molybdän und Chrom. Solche Hydrierkatalysatoren und die mit ihnen durchgeführten Hydrierungen sind beispielsweise in WO 97/43234, EP-A 0 552 463, EP-A 0 724 908, DE-A 2 501 499, BE 851 227, US 4,115, 919, EP-A 0 147 219, EP-A 0 417 867, US 5,115,086 und EP-A 0 382 050 beschrieben. Bei der Gasphasenhydrierung beträgt die Temperatur im allgemeinen 150 bis 250°C und der Druck 5 bis 100 bar. Bei Hydrierung in flüssiger Phase beträgt die Temperatur vorzugsweise 100 bis 300°C und der Druck 60 bis 300 bar.

Der in den Maleinsäureestern gebundene Alkohol wird bei der Hydrierung freigesetzt und kann wiedergewonnen und erneut eingesetzt werden.

Das erfindungsgemäße Verfahren zeichnet sich dadurch aus, dass die Bildung von Fumarsäure weitgehend verhindert wird, so dass Probleme durch Ablagerungen im Absorptionsmittelkreislauf weitestgehend vermieden werden.

Die Erfindung wird durch die nachstehenden Beispiele näher erläutert.

### Beispiele

Die nachfolgend beschriebenen Versuche werden in einer Apparatur aus Sumpfbehälter, Packungskolonne und Kopfkondensator durchgeführt, deren Durchmesser 58 mm (Hochdrucknorm NW 58) beträgt. Die Gesamthöhe der Apparatur inklusive Sumpfbehälter bis Kopfkondensator beträgt ca. 6,7 m. Die Kolonne ist mit Packungselementen B1-500 der Fa.Montz ausgerüstet, mit einer theoretischen Trennstufenzahl von 18.

Das Absorptionsmittel kann wahlweise an drei verschiedenen Stellen im oberen, mittleren oder unteren Teil der Apparatur zugefahren werden, aber immer so dass sich sowohl ober- als auch unterhalb des Zulaufes Packungselemente befinden.
Das wasserstoffhaltige Strippmittel kann an mehreren Stellen im unteren Bereich der Kolonne zugefahren werden, die alle unterhalb der tiefsten Zulaufstelle des Absorptionsmittel angebracht sind.
Mit dem temperierten Kopfkondensator ist es möglich Teilströme zu kondensieren und der Kolonne wieder als Rücklauf zuzuführen.
Der Säuregehalt wurde mittels Silylierungsmethode bestimmt. Dazu wurde 0,05 g Probe mit 0,05g internem Standard (Tetraethylenglykol-Dimethylether [TEGDME]) und 0,5 g n,o-Bis-Trimethylsilyl-Trifluoracetamid (BSTFA) versetzt und die Lösung für 25 Minuten bei 80°C erhitzt. Die so behandelte Probe wurde gaschromatographisch mit einem HP 6890 Gaschromatograph (Säule DB-1, 60m Länge) analysiert. Der Wassergehalt wurde nach der Karl-Fischer-Methode bestimmt.

### Beispiel 1:

Die oben beschriebene Apparatur wurde vor Beginn der Versuchsreihe mit dem Absorptionsmittel Dibutylphthalat gespült, restentleert und mit frischem Absorptionsmittel befüllt (= 0 % Fumarsäure).
Der Kreislaufstrom betrug 13 kg/h Dibutylphthalat, als Absorptionsmittel, mit ca.
10 Gew.-% Maleinsäureanhydrid und 1400 ppm Wasseranteil und wurde in den mittleren Abschnitt der Kolonne gefahren. Im Gegenstrom wurde das wasserstoffhaltige Strippmittel (Reinwasserstoff bzw. Wasserstoff-Gasgemisch mit > 95 Vol% H2) in den unteren Teil der Kolonne wie folgt eingespeist:
Der größere Teilstrom des Strippmittels (Wasserstoff-Gasgemisch) mit 27 Nm³/h, mit ca. 225°C, wurde in den Gasraum über den Sumpf der Kolonne eingeleitet.
Der kleinere Teilstrom des Strippmittels (Reinwasserstoff) mit 1,5 Nm³/h, mit ca. 30°C, wurde direkt in den Sumpf der Kolonne eingeleitet.
Dabei stellte sich eine Sumpftemperatur von 136°C ein, da die Zugabe des kleineren Teilstroms durch den Sumpf eine vorteilhafte Kühlwirkung entfaltet. Nach 72 Stunden wurde ein stabiler Endwert von 0,22 Gew.-% Fumarsäure im Sumpfaustrag erreicht. Der Wasserwert lag bei - 130 ppm, der Restgehalt an Maleinsäureanhydrid bei
- 0,45 Gew.-%. Bei 136°C beträgt die Fest-Flüssig Sättigung von Fumarsäure in Dibutylphthalat - 0,38 Gew.-%.

### Vergleichsbeispiel 2:

Die oben beschriebene Apparatur wurde vor Beginn der Versuchsreihe gespült, restentleert und mit frischem Absorptionsmittel befüllt (= 0 Gew.-% Fumarsäure).
Der Kreislaufstrom betrug 13 kg/h Dibutylphthalat, als Absorptionsmittel, mit ca.
10 Gew.-% Maleinsäureanhydrid und 1400 ppm Wasseranteil und wurde in den mittleren Abschnitt der Kolonne gefahren.
Im Gegensatz zu Beispiel 1 wurde jedoch das wasserstoffhaltige Strippmittel (Wasserstoff-Gemisch mit > 95 Vol.-% H2) im Gegenstrom nur an einer Stelle in den unteren Teil der Kolonne eingespeist:
Der komplette Strippmittelstrom von 28,5 Nm³/h, mit ca. 225°C, wurde in den Gasraum über den Sumpf der Kolonne eingeleitet.
Dabei stellte sich eine Sumpftemperatur von 148°C ein. Nach 72 Stunden wurde ein stabiler Endwert von 0,28 Gew.-% Fumarsäure im Sumpfaustrag erreicht.
Bei 148°C beträgt die Fest-Flüssig Sättigung von Fumarsäure in Dibutylphthalat ~ 0,48 Gew.-%.

### Beispiel 3:

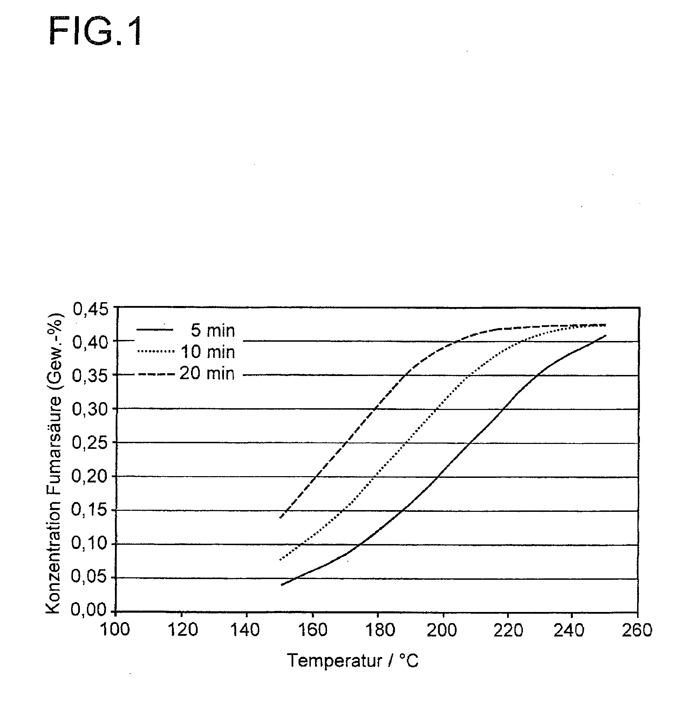

Um die Auswirkungen von Verweilzeit und Sumpftemperatur auf die Bildung von Fumarsäure zu untersuchen wurden Batchversuche in einem ölbeheizten 500 ml-Doppelmantelglaskolben mit aufgesetztem Rücklaufkühler (Normalschliff 29 mm, A=0,05 m²) durchgeführt.
Dabei wurden 5 Gew.-% Maleinsäure im Absorptionsmittel Dibutylphthalat vorgelegt, unter Rückfluss gekocht und in gewissen Zeitabständen Proben analysiert.
Wie in Abbildung 1 deutlich zu sehen, hat sowohl die Verweilzeit im Sumpf der Kolonne als auch deren Temperatur einen deutlichen Einfluss auf die Fumarsäurebildungsrate.

## Patentansprüche

1. Verfahren zur Abtrennung von Maleinsäureanhydrid aus einem maleinsäureanhydridhaltigen Gasstrom, bei dem
a) der maleinsäureanhydridhaltige Gasstrom mit einer flüssigen Absorbensphase, enthaltend mindestens ein hochsiedendes inertes Absorptionsmittel für Maleinsäureanhydrid, in Berührung gebracht wird und
b) aus der erhaltenen flüssigen Absorbatphase Maleinsäureanhydrid durch Strippung in einer Kolonne mit wasserstoffhaltigem Gas als Strippungsmittel abgetrennt wird,
**dadurch gekennzeichnet, dass** das Strippungsmittel an mindestens zwei Stellen der Kolonne, die mindestens eine theoretische Trennstufe auseinanderliegen, eingespeist wird.

2. Verfahren nach Anspruch 1, **dadurch gekennzeichnet, dass** ein Teil des Strippungsmittel durch den Kolonnensumpf oder in den Gasraum über dem Sumpf eingespeist wird.

3. Verfahren nach einem der Ansprüche 1 oder 2, **dadurch gekennzeichnet, dass** das Strippen mit wasserstoffhaltigem Gas bei 100 bis 250°C und einem Druck von 10 mbar bis100 bar erfolgt.

4. Verfahren nach einem der Ansprüche 1 bis 3, **dadurch gekennzeichnet, dass** als Gasstrom maleinsäureanhydridhaltige Reaktorabgase aus der Maleinsäureanhydrid-Herstellung durch Kohlenwasserstoff-Oxidation eingesetzt werden.

5. Verfahren zur Herstellung von Estern der Maleinsäure mit den Schritten:
a) Abtrennung von Maleinsäureanhydrid aus einem maleinsäureanhydridhaltigen Gasstrom gemäß Anspruch 4,
b) Veresterung des abgetrennten Maleinsäureanhydrids mit einem aliphatischen C₁- bis C₅-Alkohol.

6. Verfahren nach Anspruch 5 zur Herstellung von Diestern der Maleinsäure.

7. Verfahren nach einem der Ansprüche 4 bis 6 zur Herstellung von mindestens einer Verbindung ausgewählt aus der Gruppe bestehend aus 1,4-Butandiol, γ-Butyrolacton und Tetrahydrofuran mit den zusätzlichen Schritten
a) gegebenenfalls Veresterung des Maleinsäureanhydrids mit einem aliphatischen C₁- bis C₅-Alkohol
d) gegebenenfalls Abtrennung des Alkohols von dem erhaltenen Gemisch, enthaltend Derivate der Maleinsäure,
e) Hydrierung der erhaltenen Maleinsäurederivate.

## Claims

1. A process for separating off maleic anhydride from a gas stream comprising maleic anhydride, in which
a) the gas stream comprising maleic anhydride is brought into contact with a liquid absorbent phase comprising at least one high-boilitig inert absorption medium for maleic anhydride and
b) maleic anhydride is separated off from the resulting liquid absorbate phase by stripping with a hydrogen-comprising gas as stripping medium in a column,
wherein the stripping medium is fed in at at least two points on the column which are at least one theoretical plate apart.

2. The process according to claim 1, wherein part of the stripping medium is fed in through the liquid phase in the column or into the gas space above the liquid phase.

3. The process according to either claim 1 or 2, wherein stripping with a hydrogen-comprising gas is carried out at from 100 to 250°C and a pressure of from 10 mbar to 100 bar.

4. The process according to any of claims 1 to 3, wherein reactor offgases comprising maleic anhydride which are obtained from the preparation of maleic anhydride by oxidation of hydrocarbons are used as gas stream.

5. A process for preparing esters of maleic acid, which comprises the steps of:
a) separating off maleic anhydride from a gas stream comprising maleic anhydride according to claim 4,
b) esterification of the maleic anhydride which has been separated off with an aliphatic C₁-C₅-alcohol.

6. The process according to claim 5 for preparing diesters of maleic acid.

7. The process according to any of claims 4 to 6 for preparing at least one compound selected from the group consisting of 1,4-butanediol, γ-butyrolactone and tetrahydrofuran, which comprises the additional steps
c) if appropriate, esterification of the maleic anhydride with an aliphatic C₁-C₅-alcohol,
c) if appropriate, separation of the alcohol from the resulting mixture comprising derivatives of maleic acid,
e) hydrogenation of the maleic acid derivatives obtained.

## Revendications

1. Procédé de séparation d'anhydride d'acide maléique d'un flux de gaz contenant de l'anhydride d'acide maléique, dans lequel :
a) le flux de gaz contenant de l'anhydride d'acide maléique est mis en contact avec une phase de produit absorbant liquide, contenant au moins un agent d'absorption inerte à haut point d'ébullition pour l'anhydride d'acide maléique, et
b) l'anhydride d'acide maléique est séparé par stripage de la phase de produit absorbant liquide obtenue dans une colonne avec comme agent de stripage un gaz hydrogéné,
**caractérisé en ce que** l'agent de stripage est injecté en au moins deux points de la colonne, qui sont séparés d'au moins un plateau de séparation théorique.

2. Procédé selon la revendication 1, **caractérisé en ce qu'**une partie de l'agent de stripage est injecté par le bas de la colonne ou dans la chambre à gaz par le bas.

3. Procédé selon l'une des revendications 1 ou 2, **caractérisé en ce que** le stripage a lieu avec un gaz hydrogéné entre 100 et 250°C et à une pression entre 10 mbar et 100 bar.

4. Procédé selon l'une des revendications 1 à 3,
**caractérisé en ce qu'**on utilise comme flux de gaz, des gaz d'échappement du réacteur contenant de l'anhydride d'acide maléique provenant de la fabrication d'anhydride d'acide maléique par oxydation d'hydrocarbures.

5. Procédé de fabrication d'esters de l'acide maléique par les étapes suivantes :
a) séparation d'anhydride d'acide maléique d'un flux de gaz contenant de l'anhydride d'acide maléique selon la revendication 4,
b) estérification de l'anhydride d'acide maléigue séparé avec un alcool en C₁-C₅ aliphatique.

6. Procédé selon la revendication 5 de préparation de diesters de l'acide maléique.

7. Procédé selon l'une des revendications 4 à 6 de préparation d'au moins un composé choisi parmi le groupe composé des 1,4-butanediol, γ-butyrolactone et tétrahydrofurane avec les étapes supplémentaires suivantes :
a) estérification éventuelle de l'anhydride d'acide maléique avec un alcool en C₁-C₅ aliphatique,
d) séparation éventuelle de l'alcool du mélange obtenu contenant des dérivés de l'acide maléique,
e) hydrogénation des dérivés d'acide maléique obtenus.
